# EUROPEAN PATENT APPLICATION

(11) **EP 3 964 272 A1**
(43) Date of publication of application: **09.03.2022**
(21) Application number: 21194473.1
(22) Date of filing: 02.09.2021
(51) Int. Cl.: B01D 1/00, B01D 3/00, B01D 3/34, B01D 3/42, B01D 5/00, C02F 1/10, C02F 1/14

(54) **DOMESTIC ENERGY SYSTEM**

(30) Priority: 04.09.2020 IT 202000020986
(71) Applicant: Sbuelz, Anes, 33050 Fiumicello (IT)
(72) Inventor: Sbuelz, Anes, 33050 Fiumicello (IT)
(74) Representative: Busana, Omar

(57) **Abstract**

A domestic energy system (12) comprises a solar unit (100) provided with a photovoltaic solar apparatus (102) and a thermal solar apparatus (104). The domestic energy system (12) also comprises:
a conditioning unit (300); and a water apparatus (400) which is designed to produce purified and/or drinking water and is designed to be fed by a collection well (402) for surface groundwater and/or sea water and/or domestic clear water and/or rainwater. The conditioning unit (300) and the water apparatus (400) are connected by means of a network of ducts (600) to a thermal equalizer (200) which is designed to equalize the temperature of a carrier fluid supplying the conditioning unit (300) and the water apparatus (400), through the network of ducts (600). The water apparatus (400) is fed, by means of the equalizer, by the thermal energy produced by the solar unit (100).

## Description

### FIELD OF APPLICATION

This invention relates to a domestic energy system. In particular, this invention relates to a domestic energy system designed to guarantee the electrical, air conditioning and drinking water requirements in a building, as well as hot domestic water.

### PRIOR ART

As is known, the natural cycle of water in nature is the main regulator of the temperature on the ground and in the atmosphere, since evaporation on sea surfaces and transpiration of vegetation on the ground removes heat by means of the phase change of the water from liquid to vapor, thus transferring the heat into the atmosphere via the condensation of the clouds, generating the rainy conditions required in temperate zones.

However, human activity is removing surface areas for vegetation, reducing the natural mechanism for thermal equilibrium.

For this reason, residential construction has developed materials which allow good thermal insulation inside residential buildings, at the expense of an increase in temperatures on the external surfaces of the buildings or significant reflectivity of incident solar radiation.

This reduces energy requirements both in terms of heating inside the buildings in cold seasonal periods and in terms of energy requirements for air conditioning during hot periods, or during the seasons in temperate regions which necessarily require more continuous air conditioning than in tropical regions.

Domestic operation in modern residential buildings is now technologically adapted to exclusively electrical energy consumption, with no emissions from fossil fuels. Nevertheless, the residential buildings are still dependent on distribution networks: electrical networks for energy; aqueducts for drinking water; the sewerage system for drains (wastewater treatment plants); at the moment, these are irreplaceable in population agglomerations.

The networks, as well as having high investment costs for the construction thereof, also have maintenance and transport costs (with particularly high investment and energy costs in urban conurbations with a low population density) and, in order to function, require energy which is normally generated by fossil fuels to which the losses for the transport of the asset to be used are added.

As is known, modern residential buildings (as in the past) in suburban regions of low population density and in rural environments require rainwater and clear water to be collected from domestic drains, while wastewater may be used directly in agriculture and in intensive farming.

When the need for water exceeds the amount available locally, as happens in tropical regions or in various temperate regions, it is possible to access surface aquifers, which are characterized by a short renewal time but which may be easily polluted both by agricultural and industrial activities, or by brackish water close to sea shores.

Solar technologies in the domestic field are today an advantageous solution both for absorbing heat (solar collectors) and for generating electricity (photovoltaic panels), making energy autonomy possible for domestic requirements. Nevertheless, the photovoltaic technologies are negatively impacted by the increase in ambient temperatures and by the incidence of solar radiation, in particular in tropical regions with greater exposure to the sun; therefore, in order to overcome this phenomenon, technologies have been developed that are suitable for absorbing excess heat on the photovoltaic cells while attempting to maintain adequate efficiency.

In terms of electrical energy, technologies which are designed for daily accumulation for nighttime use and which are designed to absorb variabilities in terms of exposure to sunlight do exist; however, in terms of thermal energy, accumulation technologies that are economically sustainable do not exist.

### SUMMARY OF THE INVENTION

There is therefore a need to resolve the disadvantages and limitations mentioned with reference to the prior art.

Consequently, there is a need to provide a domestic energy system which makes it possible to obtain efficient daily accumulation of electrical energy but which also allows daily accumulation and/or efficient use of thermal energy.

There is also a need for a domestic energy system which makes it possible to utilize the available water more efficiently.

These requirements are met at least in part by a domestic energy system according to claim 1.

### DESCRIPTION OF THE DRAWINGS

Further features and advantages of this invention will become more apparent from the following detailed description of preferred, non-limiting embodiments thereof, in which:
- Fig. 1 is a schematic view of a domestic energy system according to this invention;
- Fig. 2 is a schematic view of an embodiment of part of a water apparatus of a domestic energy system according to this invention;
- Fig. 3 is a schematic view of an embodiment of a component of a water apparatus of a domestic energy system according to this invention;
- Fig. 4 is a schematic view of an embodiment of a component of a water apparatus of a domestic energy system according to this invention;
- Fig. 5 is a schematic view of an embodiment of a component of a domestic energy system according to this invention;
- Fig. 6 is a schematic view of a possible mode of operation of a component of a domestic energy system according to this invention;
- Fig. 7 is a schematic view of an embodiment of a conditioning unit of a domestic energy system according to this invention;
- Fig. 8 is a schematic view of an embodiment of a component of a domestic energy system according to this invention; and
- Fig. 9 is a schematic view of a mode of operation of the component from Fig. 8 of a domestic energy system according to this invention.

Elements or parts of elements common to the embodiments described hereinafter will be indicated with the same reference signs.

### DETAILED DESCRIPTION

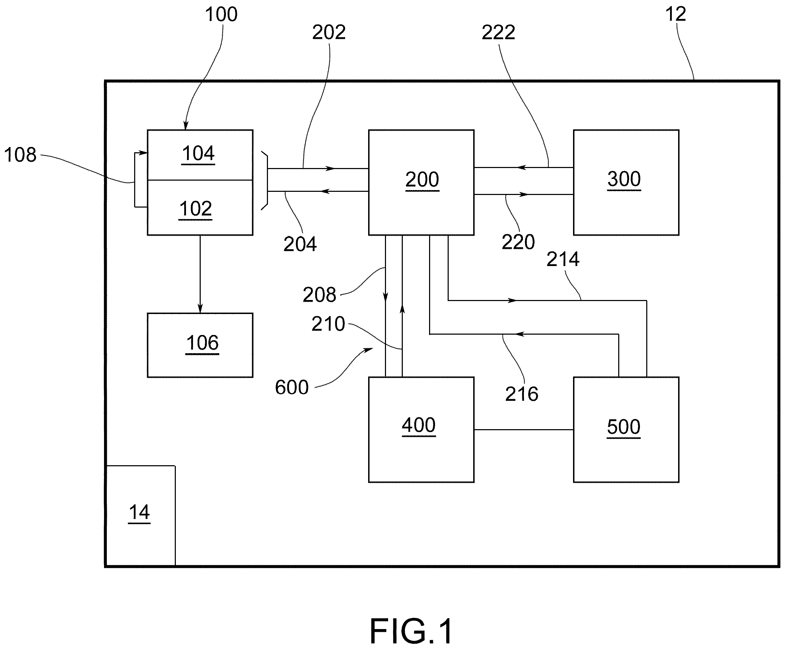

In Fig. 1, reference sign 12 denotes a domestic energy system.

The domestic energy system 12 comprises a solar unit 100 provided with a photovoltaic solar apparatus 102 and a thermal solar apparatus 104 which are adapted to operate with a carrier fluid.

In this context, carrier fluid is understood to mean a fluid designed to absorb and give out heat. For example, a carrier fluid is a fluid which is designed to absorb heat from a thermal solar unit and give out this heat or a portion thereof to a consumer, as will be explained in the following.

The domestic energy system also comprises a thermal equalizer 200 which is designed to contain a predetermined quantity of said carrier fluid and is designed to equalize the temperature of said carrier fluid.

The domestic energy system also comprises a conditioning unit 300 designed to operate with the carrier fluid; and a water apparatus 400.

The water apparatus 400 is designed to produce purified and/or drinking water, on account of the heat exchanged with said carrier fluid, and is designed to be fed by a collection well 402 for surface groundwater and/or sea water and/or domestic clear water and/or rainwater.

The solar unit 100, the conditioning unit 300 and the water apparatus 400 are connected and fed by means of a network of ducts 600 by the carrier fluid coming from the thermal equalizer (200).

In other words, the solar unit 100, the conditioning unit 300 and the water apparatus 400 exchange heat between them by means of the carrier fluid.

In particular, the water apparatus 400 comprises:
- a humidification tank 404 which is connected by means of the network of ducts 600 to the thermal equalizer 200 in order to heat the water contained in the humidification tank;
- a condensation apparatus 406 in which a flow of humid air coming from the humidification tank 404 is condensed;
- a duct 412 which connects the humidification tank 404 to the condensation apparatus 406 and allows water vapor-saturated air to flow out of the humidification tank 404 to the condensation apparatus 406; and
- a discharge duct 408 which connects the condensation apparatus 406 to the humidification tank 404 in order to introduce dry air into the humidification tank 404.

Advantageously, the water apparatus 400 used to produce purified and/or drinking water, absorbs the heat generated by the solar unit 100 and/or by a combination of other sources of the system 12, via the thermal equalizer 200, in order to bring the water contained in the humidification tank 404 to and hold said water at a predetermined temperature.

According to one possible embodiment, the holding temperature may be between 55-60°C, for example, and the humidification tank 404 may be adapetd to contain up to 400 liters, for example.

The domestic energy system may comprise a central control unit 14 which, by means of a processor program and one or more installed sensors, controls the various steps of the method and the activation of components such as pumps, compressors, blowers, etc., which will be described in the following.

The variability of the heat generated by the exposure of the solar unit 100 to sunlight in a given moment of the day is controlled by the quantity of water involved in the phase change inside the humidification tank 404, which quantity is correlated to the mass of air put into circulation. In so doing, it is possible to maintain the process water at a constant temperature at a value which is optimized for the operability of all the connected apparatuses but at the same time is capable of reducing the bacterial count (>50°C).

The process is implemented by a flow of dry air and controlled, on the basis of the available heat, comes from the condensation apparatus 406 and is introduced into the humidification tank 404. Once introduced into the humidification tank 404, it reaches humidity saturation by absorbing heat.

According to one possible embodiment, the flow of dry air may be controlled on the basis of a flow rate value.

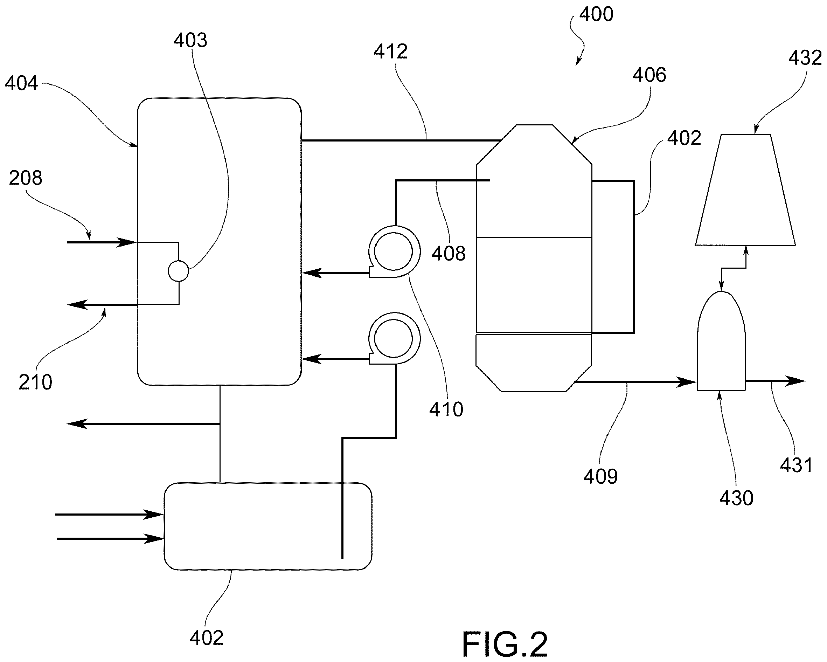

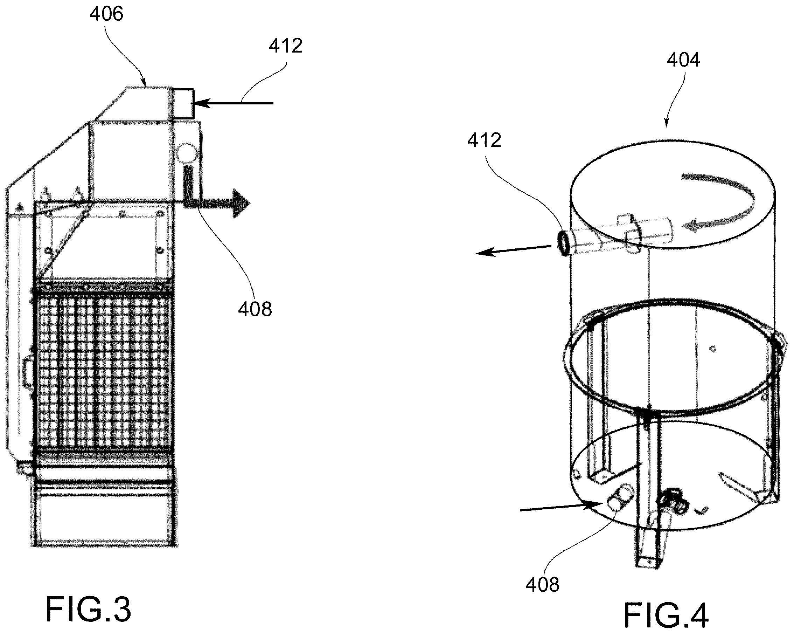

In Fig. 2 and 3, the duct used to introduce dry air into the humidification tank 404 is indicated by reference sign 408.

The flow of the air through the duct 404 may be regulated by means of a compressor 410.

The flow of air saturated with humidity that comes from the humidification tank 404 condenses part of the contained humidity in the condensation apparatus 406.

In this regard, in Fig. 2 and 3, reference sign 412 indicates the duct which connects the humidification tank 404 to the condensation apparatus 406 and which allows the saturated vapor to flow out of the humidification tank 404 to the condensation apparatus 406.

Fig. 3 is a schematic view of one possible embodiment of a condensation apparatus 406.

As may be seen in the figure, the condensation apparatus 406 may comprise an upper duct 412 through which the flow of humid air coming from the humidification tank reaches the inside of the condensation apparatus 406.

This humid air, as it is cooled down by a flow of air forced into the condensation apparatus 406 (for example by means of a fan) to a temperature slightly greater than that of the introduced air, exits a few degrees centigrade higher and is also saturated with humidity. According to one possible embodiment, the air exiting through the duct 408 may have, for example, a water content in the form of vapor of approximately 30 g/m3, having generated a condensate equal to 45÷70 g/m3 of circulating air.

This air exiting the condensation apparatus 406, upon being heated by the same humid air exiting the humidification tank 404 (for example by means of a crossflow heat exchanger), is forced into the humidification tank 404 through the duct 408. As a result, the air absorbs heat which, by way of example, may be equal to 195÷267 kJ/m3 of air, thus maintaining its absolute humidity but reducing its relative humidity.

According to alternative possible embodiments, air may be introduced into the humidification tank 404 laterally, at a depth of a few decimeters from the water surface.

The introduction of air at an intermediate level with respect to the depth of water contained in the tank allows a convective motion to occur, produced by the removal of heat, and induces convective stratification.

Therefore, the humidification tank 404 makes it possible to establish a level of water so as to allow convective stratification through the introduction of air, so as to force the solids contained in the feed water to deposit on the base of the humidification tank 404 and force the air which goes back into the mass of the water to be more or less uniformly distributed over the cross section thereof.

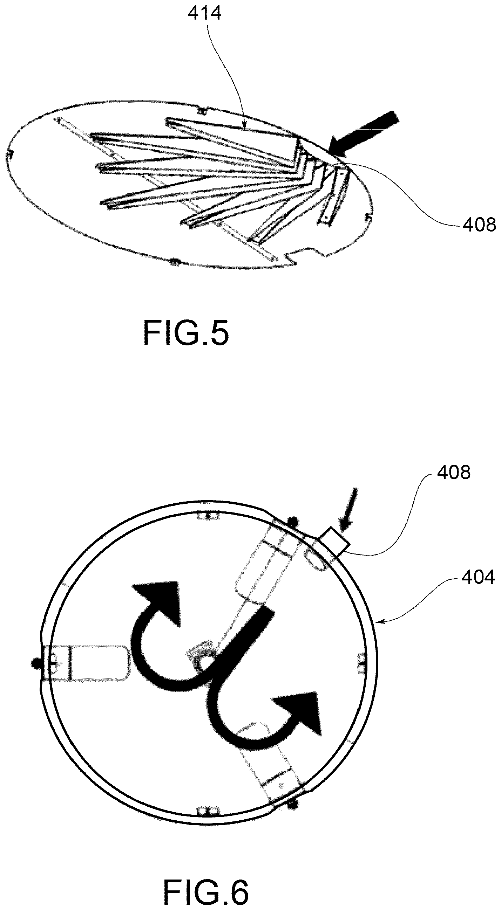

At the same time, as shown schematically in Fig. 6, a dragging effect in the water is produced, which generates a horizontal swirling motion in the lateral regions of the tank with respect to the air introduction axis, thus promoting the exchange of heat between the heating elements 403 (for example a tubular coil).

According to one possible embodiment, the heating elements 403 may be two coiled elements provided on parallel planes. Advantageously, the outlet mouth of the duct 408 may be positioned between the two coiled elements.

According to one possible embodiment, in order to obtain uniform distribution over the lateral surface of the humidification tank, radial channels 414 may be used at the outlet mouth of the duct 408. These radial channels 414, which extend inside the humidification tank 404, may be upwardly open (toward the free surface of the water) so as to be able to utilize the hydrostatic pressure to guide the air flow. Moreover, the uniform distribution over the lateral surface of the humidification tank 404 may also be improved by tapering the thickness of the radial channels 414 from a greater thickness at the internal surface of the humidification tank to a lesser thickness toward the inside of the humidification tank.

This upward air flow, driven by the hydrostatic pressure, generates nebulization caused by the dragging of the introduced air, which nebulization needs to be removed from the air for introduction to the condensation apparatus 406.

According to one possible embodiment, the saturated vapor duct 412 may be positioned in directions at an angle with respect to the axis of the humidification tank 404. In so doing, it is possible to induce a swirling undercurrent motion so as to induce the nebulization to be deposited on the walls of the container, and the saturated vapor is subsequently introduced into the duct 412.

The deposit on the base of the humidification tank 404 may be expelled during the daily cycle to restore functionality for the coming day, together with the quantity of water expelled.

The condensation apparatus 406 may comprise a recirculation channel 407 for condensed air, which channel connects the upper part of the condensation apparatus 406 to the lower part where the water is collected.

According to one possible embodiment, the water collected by the condensation apparatus 406 may be conveyed through an outlet duct 409 to an autoclave 430 and then provided for domestic use through a drinking water duct 431, or stored inside a reservoir 432.

As mentioned above, the solar unit 100 comprises a photovoltaic solar apparatus 102 and a thermal solar apparatus 104.

In particular, the photovoltaic solar apparatus 102 is adapted to provide electrical energy to an accumulator/inverter 106 and to provide at least part of the heat which develops on the surface thereof to the thermal solar apparatus 104, as shown schematically in Fig. 1 by the reference sign 108. The means used to transfer heat from the photovoltaic apparatus 102 to the thermal solar system will not be described further, as they are known per se to a person skilled in the art.

On account of the excess heat being recovered by the thermal solar apparatus 104 and not escaping into the environment, this results in a further contribution to the energy efficiency of this invention.

In this invention, the electrical energy in excess of instant consumption is accumulated in a manner known per se, in order to be made available for nighttime use or in favorable meteorological conditions.

Thermal energy, however, which is difficult to accumulate, may be used in the water purifier/drinking water apparatus 400 for the development of a natural water cycle in an artificial environment. More specifically, it may be used for the production of purified and optionally stored drinking water, as well as a possible reserve of hot water.

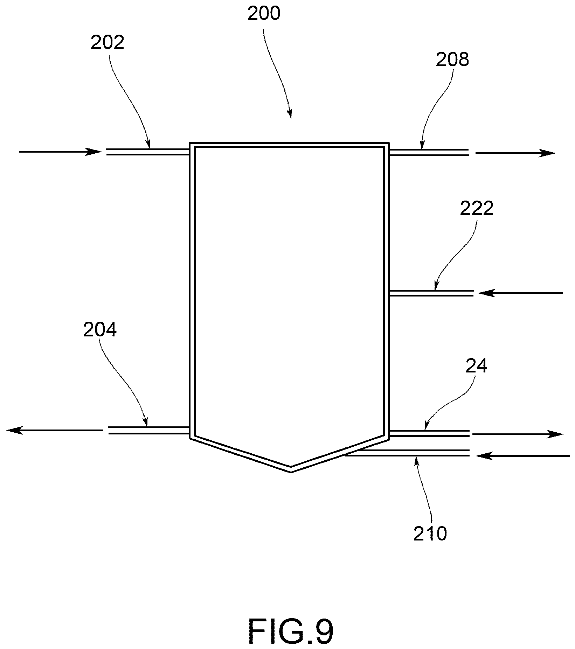

Fig. 9 is a schematic view of one possible embodiment of a thermal equalizer 200 according to the present invention.

According to one possible embodiment, the thermal equalizer 200 is a container designed to contain a predetermined quantity of carrier fluid, for example water, or water to which additives have been added. The additives used may be of a kind known per se, for example for preventing freezing.

In particular, according to one possible embodiment, the following ducts branch off from the thermal equalizer 200:
- a delivery duct 208 of the humidification tank 404;
- a return duct 210 from the humidification tank 404;
- a delivery duct 204 to the solar unit 100;
- a return duct 202 from the solar unit 100;
- a delivery duct 220 to the conditioning unit 300; and
- a return duct 222 from the conditioning unit 300.

According to one possible embodiment, a pump 206 which is designed to circulate the carrier fluid may be provided on the delivery duct 204 to the solar unit 100.

According to one possible embodiment, a pump 212 which is designed to circulate the carrier fluid may be provided on the return duct 210 from the humidification unit 404.

According to one possible embodiment, a pump 224 which is designed to circulate the carrier fluid may be provided on the delivery duct to the conditioning unit 300.

In particular, according to one possible embodiment, the thermal equalizer 200 may comprise ducts 214, 216 for feeding heat to the domestic water reservoir.

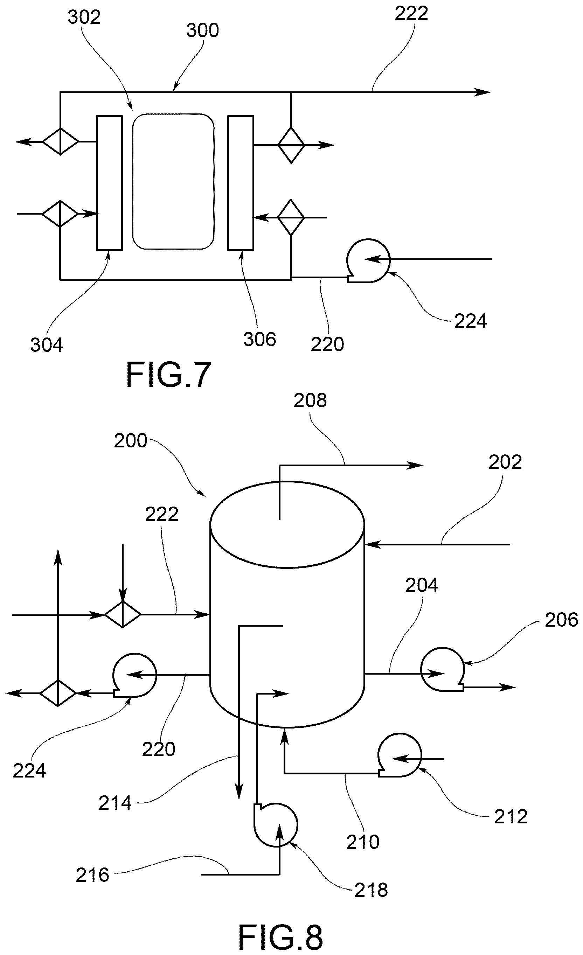

With reference to the embodiment shown in Fig. 8, in addition to the ducts mentioned above, the thermal equalizer 200 may be provided with:
- a delivery duct 214 to the domestic water reservoir 500; and
- a return duct 216 from the domestic water reservoir 500.

Moreover, according to one possible embodiment, a pump 216 which is adapted to circulate the carrier fluid may be provided on the return duct 216 from the domestic water reservoir 500.

The capacity of the thermal equalizer 200 may advantageously be approximately equal to the nominal circulation flow rate.

The thermal equalizer may be, for example, a cylinder which has a height equal to two times its diameter.

Advantageously, by controlling the flow of the carrier fluid, it may be possible to maintain a particular feed temperature to the water apparatus 400 of approximately 70°C.

Considering that, when fully operational, the humidification tank of the water apparatus preferably operates at a temperature between 55 and 60°C and the delivery for heating is maintained above 70°C, the circulation pump 212 may be dimensioned for a flow rate of approximately 25 liters per minute and for an approximate productivity of around 400 liters/day.

However, the circulation pump 206 of the solar unit 100 may be regulated to obtain an output from the solar unit of approximately 70°C, both for the initial heating phase and the operational phase.

In this way, the water apparatus 400 may start operating when the return temperature to the solar unit 100 reaches the minimum operating temperature of approximately 55°C.

This temperature regime may be controlled by means of regulating the flow of humidification air when the system is in productive operation, thus adapting to the heat regime provided by the solar unit 100.

The temperatures which may be obtained by the solar units are normally greater than those which may be obtained by a heat pump used for domestic air conditioning systems, even if they operate using particularly dry cryogenic gases.

In order to overcome this restriction, it is possible to position the hot inlet for the various consumers on the thermal equalizer 200 at different heights for the different systems, so as to obtain, at full operation, the maximum temperature at the upper outlet (approximately 70°C) and the sufficiently low inlet temperature (approximately 55°C) to the heating apparatuses (for example, a condenser, evaporator for the heat pump, and PVT panels).

This allows heat to be recovered from the daytime air conditioning of the residential interior environments.

In the dimensional example given here, a circulator which has a flow rate of at least 25 liters/minute between the solar unit 100 and the thermal equalizer 200 and between the thermal equalizer 200 and the humidification tank 404 may make it possible to operate within the thermal head given as 70-55°C, and only when the temperatures at full operation are those specified may the water apparatus 400 be activated, with the activation of the blower or the compressor 410.

The pump 206 of the solar unit 100 may advantageously be regulated to obtain an outlet temperature from the solar unit 100 of approximately 70°C, at which it is possible to obtain a heating regime which is in any case linked to the current level of exposure to sunlight.

Mixing the fluids in the temperature balancing container adapts the transfer of heat to the humidification tank to the initial and operational heating temperatures, also by means of regulating the forced circulation air flow for humidification.

During the phase of heating the residential interiors by means of the heat pump, always keeping the circulation pump of the heating circuit of the humidification tank active, the heat is provided to the evaporator of the heat pump from the water contained in the humidification tank by means of the temperature equalizer, which improves the efficiency of the heat pump for heating the residential interiors.

By activating the circulation to the solar unit, it is advantageously possible to prevent the fluid from freezing, even in the absence of anti-freeze additives.

By way of example, a conditioner that has a cryogenic gas compressor capacity of 1 kW (normally used in domestic systems) could deliver 10 kJ of air conditioning and 14 kJ of heating at an improved efficiency (COP = 4 or above).

The conditioning unit 300 comprises a heat pump 302 which is provided with two heat exchangers: an evaporator 304 (cooling portion) and a condenser 306 (heating portion).

These elements are normally air-gas exchangers, one for inside the residence and one for outside, which, when suitably switched, assign the air conditioning or heating function to the residential interior environments, whilst the other function is assigned to the outside.

The negative aspect of exchangers outside the residence that use gas-air technology of the prior art is that the operating conditions are normally contradictory for the best operating performance of a heat pump, because for heating the environment inside the residence, the evaporator thereof normally located outside the residence is disadvantaged since it functions at lower external ambient temperatures, whereas for air conditioning the environment inside the residence, the condenser thereof is disadvantaged since it functions at higher external ambient temperatures.

The conditioning unit may advantageously use (gas-water) plate heat exchangers so as to be able to provide the heat pump outside and make it operate at optimal conditions, if integrated with the water apparatus 400.

This means that, during the cooling operation, normally in the afternoon hours, the heat provided by the condenser 306 (above 4 kWh) may be added to that from the solar unit 100, by means of the thermal equalizer 200. Meanwhile, for the heating operation, normally in the nighttime hours, the evaporator 304 may utilize the heat of the water of the humidification tank 404 which has been left at the minimum operational temperature (55°C) due to the lack of solar irradiation, again by means of the thermal equalizer 200.

As mentioned above, a domestic water reservoir 500 may also be connected to the thermal equalizer, which domestic water reservoir may therefore utilize the heat generated by the solar unit 100.

The domestic water reservoir may advantageously have a capacity of approximately 80-100 liters. This capacity may in fact be sufficient for the daytime consumers of a family and could absorb, via the thermal equalizer 200, energy equal to approximately 3 kWh per day.

By way of example, some dimensions of a system according to this invention are described in the following.

According to one possible embodiment, the surface irradiated by the solar unit 100 may be approximately 40 m².

The electrical energy required for the functioning of the water apparatus 400 may be less than 1.5 kWh when fully operational with exposure to sunlight, because a quota of heat is recovered from the solar unit 100 via the thermal equalizer 200.

The domestic electricity consumption may be estimated as approximately 9÷12 kWh/day, and therefore approximately 50% of the electrical energy generated by the solar system is available for domestic use (18÷25 kWh), with margins for absorbing possible atmospheric variables.

Taking into account the energy removed for the volume of domestic water (approximately 80-100 liters), which energy is required for maintaining the use temperature (approximately 50-55°C), and the energy added for the nighttime air conditioning inside the residence that is provided by a heat pump, it is possible to estimate a daily production of purified and fresh drinking water of greater than 400 liters, which is sufficient for the consumption of a family (domestic and drinkable).

Using the heat pump, which is switched to internal heating of the residence in the hours following sunset, may advantageously make the heat of the water contained in the evaporation tank of the water apparatus available, which water apparatus, entering a rest phase after sunset, contains a mass of hot water which could be used to condition the evaporation of the heat pump by keeping the performance of this apparatus at high levels, independently of the external ambient conditions (for example in the event of low temperatures).

Considering the mass of water contained in the humidification tank 404 and the temperatures involved (55°C minimum temperature of the mass of water in the tank), it is possible to obtain at least 3 hours of heating with at least 14 kWh of heating and electrical consumption of less than 3.5 kWh.

The daily wastewater for renewing the artificial water apparatus, in order to restore the functionality of the apparatus for the coming day, may be used to irrigate neighboring domestic crops or, if from salty sources, may be disposed of via natural surface channels close to marine shorelines (temperature limits and increased chemical contents in solution are made compatible with the disposal environment).

The land occupation of a residential building may be utilized in order to capture a large part of the solar energy, both in terms of heat and electrical energy, with an optimal combination of thermal collectors and photovoltaic panels, for the domestic requirements for energy and fresh water suitable for human use, whatever the extraction source of the latter may be (recycling, storage, collection).

A surface of a building covered by a solar unit of approximately 40 m2 may house approximately ten thermal solar panels and approximately ten photovoltaic panels. A configuration of this kind may provide, for example, at least 3 kWh of electricity and approximately 90,000 kWh of heat on average over the course of the day.

This energy is correlated to the elevation of the sun and to the orientation and elevation of the installation, which may improve the values and make the system more productive.

The electrical generation is absorbed by the residential consumers and the excess generated by the photovoltaic system is absorbed by the accumulation of electricity for the consumers during the nighttime hours or when the sun is down, while the heat generated by the solar radiation, which is difficult to accumulate, is absorbed by the water apparatus by using part of the electrical consumption generated by its exposure to sunlight for the activities thereof.

A person skilled in the art will be able to make modifications to the embodiments described above and/or substitute described elements with equivalent elements, in order to satisfy particular requirements, without departing from the scope of the accompanying claims.

## Claims

1. Domestic energy system (12) comprising a solar unit (100) provided with a photovoltaic solar apparatus (102) and a thermal solar apparatus (104) which are designed to operate with a carrier fluid;
said system comprising:
- a thermal equalizer (200) adapetd to contain a predetermined quantity of said carrier fluid and is designed to equalize the temperature of said carrier fluid
- a conditioning unit (300) which is designed to operate with said carrier fluid; and
- a water apparatus (400) which is designed to produce purified and/or drinking water, adapted to operate with said carrier fluid, and adapted to be fed by a collection well (402) for surface groundwater and/or sea water and/or domestic clear water and/or rainwater;
wherein said solar unit (100), said conditioning unit (300) and said water apparatus (400) are connected and fed by means of a network of ducts (600) by said carrier fluid coming from said thermal equalizer (200).

2. Domestic energy system (12) according to claim 1, **characterized in that** said water apparatus (400) comprises:
- a humidification tank (404) connected by means of said network of ducts (600) to said thermal equalizer (200) in order to heat said humidification tank;
- a condensation apparatus (406) in which a flow of humid air coming from said humidification tank (404) is condensed;
- a duct (412) which connects the humidification tank (404) to the condensation apparatus (406) and allows saturated vapor to flow out of the humidification tank (404) to the condensation apparatus (406); and
- a discharge duct (408) which connects said condensation apparatus (406) to said humidification tank (404) to introduce dry air into the humidification tank (404).

3. Domestic energy system (12) according to any of the preceding claims, **characterized in that** the water apparatus (400) is adapted to absorb the heat generated by the solar unit (100) and/or by a combination of other sources of the system (12), via said thermal equalizer (200), in order to bring the water contained in the humidification tank 404 to and hold said water at a predetermined temperature.

4. Domestic energy system (12) according to the preceding claim, **characterised in that** the holding temperature inside the humidification tank (404) is between 55-60°C.

5. Domestic energy system (12) according to any of claims 2-5, **characterized in that** the introduction of air into the humidification tank (404), modulated according to the heat available from the sources, occurs laterally, at a depth of a few decimetres from the water surface, so as to induce a circulatory motion to the mass of water.

6. Domestic energy system (12) according to any of claims 2-5, **characterized in that** it comprises, at the outlet mouth of the duct (408), radial channels (414) that extend inside the humidification tank (404), said radial channels (414) being open toward the free surface of the water, said radial channels also having a tapered thickness starting from a greater thickness at the internal surface of the humidification tank (404) to a lesser thickness toward the inside of the humidification tank (404); said saturated vapor duct (412) being positioned in directions at an angle with respect to the axis of the humidification tank (404).

7. Domestic energy system (12) according to any of the preceding claims, **characterized in that** said thermal equalizer (200) is a container adapted to contain a predetermined quantity of carrier fluid; said thermal equalizer (200) being connected to said humidification tank (404), to said solar unit (100) and to said conditioning unit (300) by means of:
- a delivery duct (208) of the humidification tank (404);
- a return duct (210) from the humidification tank (404);
- a delivery duct (204) to the solar unit (100);
- a return duct (202) from the solar unit (100);
- a delivery duct (220) to the conditioning unit (300); and
- a return duct (222) from the conditioning unit (300).

8. Domestic energy system (12) according to any of claims 2-7, **characterized in that** the air coming out of the condensation apparatus (406), after being heated by the same humid air coming out of the humidification tank (404), is forced into the humidification tank (404) through a duct (408).

9. Domestic energy system (12) according to any of the preceding claims, **characterized in that** the excess thermal energy is used in the water apparatus (400) for the production of drinking water which is purified and optionally stored as a reserve of water, and for the generation of hot domestic water.

10. Domestic energy system (12) according to any of the preceding claims, **characterized in that** it comprises an accumulator/inverter (106), said photovoltaic solar apparatus (102) being designed to provide electrical energy to said accumulator/inverter (106) and to provide at least part of the heat which develops on the surface thereof to the thermal solar apparatus (104).

11. Domestic energy system (12) according to any of the preceding claims, **characterized in that** the following ducts branch off from said thermal equalizer (200):
- a delivery duct (208) of the humidification tank (404);
- a return duct (210) from the humidification tank (404);
- a delivery duct (204) to the solar unit (100);
- a return duct (202) from the solar unit (100);
- a delivery duct (220) to the conditioning unit (300); and
- a return duct (222) from the conditioning unit (300).

12. Domestic energy system (12) according to the preceding claim, **characterized in that** a pump (206) which is designed to circulate the carrier fluid is provided on said delivery duct (204) to the solar unit (100).

13. Domestic energy system according to any of claims 11-12, **characterized in that** a pump (212) which is designed to circulate the carrier fluid is provided on the return duct (210) from the humidification tank (404).

14. Domestic energy system according to any of claims 11-13, **characterized in that** a pump (224) which is designed to circulate the carrier fluid is provided on the delivery duct to the conditioning unit (300).
